# EUROPEAN PATENT APPLICATION

(11) **EP 4 804 309 A1**
(43) Date of publication of application: **09.09.2026**
(21) Application number: 24885456.4
(22) Date of filing: 17.10.2024
(51) Int. Cl.: H01M 50/184, H01M 10/04, H01M 10/0587, H01M 50/107, H01M 50/167

(54) **SEALED BATTERY**

(30) Priority: 31.10.2023 JP 2023186266
(71) Applicant: Panasonic Intellectual Property Management Co., Ltd., Kadoma-shi, Osaka 571-0057 (JP)
(72) Inventor: YAMASHITA, Shuichi, kadoma-shi, Osaka 571-0057 (JP); FUKUOKA, Takahiro, kadoma-shi, Osaka 571-0057 (JP); SUZUKI, Kana, kadoma-shi, Osaka 571-0057 (JP)
(74) Representative: Eisenführ Speiser
(86) International application number: PCT/JP2024/036950
(87) International publication number: WO 2025/094682

(57) **Abstract**

A sealed battery (10) comprises an electrode body, an outer can (20), a sealing body (19), and a gasket (30) interposed between the outer can and the sealing body. The gasket has a protruding portion (31) that protrudes radially inward of the radially inner end of a radially bent portion (20c) that is formed at an opening-side end portion of the outer can and is bent radially inward. A cutout (32) which is continuous on at least a portion of the circumferential direction of the axially outer surface of the protruding portion and has a width in the radial direction so as to include a tip (37) of the protruding portion is formed. The axial thickness of the part of the protruding portion where the cutout is formed is smaller than the thickness of a part of the gasket that is adjacent to the radially outer side of the cutout.

## Description

### TECHNICAL FIELD

The present disclosure generally relates to a sealed battery, and more particularly to suppressing defects caused by wrinkles occurring at an end portion of a gasket in a configuration in which a sealing assembly is crimped and fixed to the end portion of a housing can via the gasket.

### BACKGROUND ART

Conventionally, as a sealed battery, there is a known configuration comprising: an electrode assembly; a housing can having a cylindrical shape with a bottom and containing the electrode assembly; and a sealing assembly that closes an opening of the housing can. Moreover, Patent Literature 1 describes a sealed battery including a sealing assembly that is crimped and fixed to an end portion of a housing can via a gasket made of an insulating resin.

### CITATION LIST

### PATENT LITERATURE

PATENT LITERATURE 1: Japanese Unexamined Patent Application Publication No. 2008-204839

### SUMMARY

In a configuration in which a sealing assembly is crimped and fixed to an end portion of a housing can via a gasket as in the configuration disclosed in Patent Literature 1, during manufacturing of a battery, as the end portion of the housing can is crimped, the gasket including a cylindrical portion along the axial direction, which conforms to an inner peripheral shape of the opening-side end portion of the housing can before being crimped, is bent radially inward at substantially a right angle over the entire circumference. Moreover, by bending the end portion of the housing can radially inward, a radially bent portion is formed, and a protruding portion of the gasket is formed to protrude radially from a radially inner end of the radially bent portion. At this time, if the radial length of the protruding portion is increased, it becomes easier to ensure a radial insulation distance between the tip of the housing can and an outer peripheral surface of a cylindrical portion located at the center of the sealing assembly.

However, since the end portion of the gasket is bent radially inward as the end portion of the housing can is crimped, a large compressive stress is generated in the circumferential direction at the radially inner end portion of the gasket. Therefore, in the protruding portion of the gasket, wrinkles that deform the protruding portion into a wavy shape may occur. Due to the wrinkles, in the protruding portion of the gasket, a section that is deformed and warped axially outward of the battery, and a section that is deformed axially inward and pressed against an axially outer surface of the sealing assembly are produced alternately in the circumferential direction. Further, the greater the radial length of the protruding portion, the larger the axially outward deformation of the protruding portion.

When the axially outward deformation of the protruding portion becomes larger due to occurrence of such wrinkles, various defects are likely to occur. For example, when welding a metal current collector plate to a shoulder portion located near a corner portion of the opening-side end portion of the housing can, the gasket may prevent the current collector plate from coming into contact with the shoulder portion, which results in defective welding. Furthermore, when inspecting a height from the bottom to the shoulder portion of the battery in an inspection step during manufacturing of the battery, if an inspection jig comes into contact with the protruding portion of the gasket instead of the shoulder portion, the battery may be determined to be dimensionally defective.

Therefore, it is an advantage of the present disclosure to provide a sealed battery capable of suppressing defects caused by wrinkles occurring at the end portion of the gasket in the configuration in which the sealing assembly is crimped and fixed to the end portion of the housing can via the gasket.

A sealed battery according to the present disclosure comprises: an electrode assembly including a positive electrode and a negative electrode wound together via a separator; a housing can having a cylindrical shape with a bottom and containing the electrode assembly; a sealing assembly that closes an opening of the housing can; and an annular gasket interposed between the housing can and the sealing assembly, wherein a radially bent portion that is bent radially inward is formed at an opening-side end portion of the housing can, whereby the sealing assembly is crimped and fixed to the opening-side end portion via the gasket, the gasket has a protruding portion that is formed to protrude radially inward beyond a radially inner end of the radially bent portion, a cutout is formed in at least a section in a circumferential direction of an axially outer surface of the protruding portion such that the cutout is continuous and has a radial width including a tip of the protruding portion, and an axial thickness of the protruding portion in the section where the cutout is formed is smaller than a thickness of the gasket in a section adjacent to a radially outer side of the cutout.

According to the sealed battery of the present disclosure, even when wrinkles occur at the end portion of the gasket in the configuration in which the sealing assembly is crimped and fixed to the end portion of the housing can via the gasket, since the cutout is formed, it is possible to prevent a tip side of the protruding portion of the gasket, which is prone to axially outward deformation, from being deformed axially outward beyond a shoulder portion of the housing can. Therefore, it is possible to suppress defects caused by wrinkles occurring in the gasket, and prevent, for example, welding defects at the current collector plate.

### BRIEF DESCRIPTION OF DRAWINGS

FIG. 1 is an axial cross-sectional view of a sealed battery according to an embodiment of the present disclosure, in which there are no wrinkles in a protruding portion of a gasket.
FIG. 2 is an enlarged view of a portion A in FIG. 1.
FIG. 3 is a top view of FIG. 1.
FIG. 4 is a view corresponding to FIG. 2 when wrinkles occur in the protruding portion of the gasket in the embodiment.
FIG. 5 is a top view of FIG. 4.
FIG. 6 is a view corresponding to FIG. 4 and showing that a defect occurs when wrinkles occur in a protruding portion of a gasket of a sealed battery of a comparative example.
FIG. 7 is a view corresponding to FIG. 2 and showing that there is no wrinkle in a protruding portion of a gasket of a sealed battery of another example of the embodiment.
FIG. 8 is a view corresponding to FIG. 4 and showing that wrinkles occur in the protruding portion of the gasket of the sealed battery of the another example of the embodiment.

### DESCRIPTION OF EMBODIMENT

Hereinafter, an embodiment of a sealed battery according to the present disclosure will be described in detail while referring to the drawings. Note that the sealed battery of the present disclosure may be a primary battery or a secondary battery. Moreover, the sealed battery of the present disclosure may be a battery using an aqueous electrolyte, or a battery using a non-aqueous electrolyte. Although a non-aqueous electrolyte secondary battery (lithium ion battery) using a non-aqueous electrolyte is described below as an example of the sealed battery of the present disclosure, the sealed battery of the present disclosure is not limited to this, and the electrolyte may be an aqueous electrolyte.

It has been anticipated from the beginning that a new embodiment will be constructed by appropriately combining features of the embodiment and modified examples described hereinbelow. In the following embodiment, the same configurations are labeled with the same reference signs in the drawings, and repeated descriptions are omitted. Moreover, the drawings include schematic diagrams, and the dimensional ratios of the lengths, widths, heights, etc. of members in different drawings do not necessarily match. In the present description, a sealing assembly 19 side in the axial direction of a sealed battery 10 is the "upper side", and a bottom 20a side of a housing can 20 in the axial direction is the "lower side". Further, among the components described below, components that are not stated in an independent claim representing the highest concept are optional components and are not essential components. Furthermore, the present disclosure is not limited to the following embodiment and modified example thereof, and various improvements and modifications are possible within the scope of the claims of the present application and an equivalent thereof.

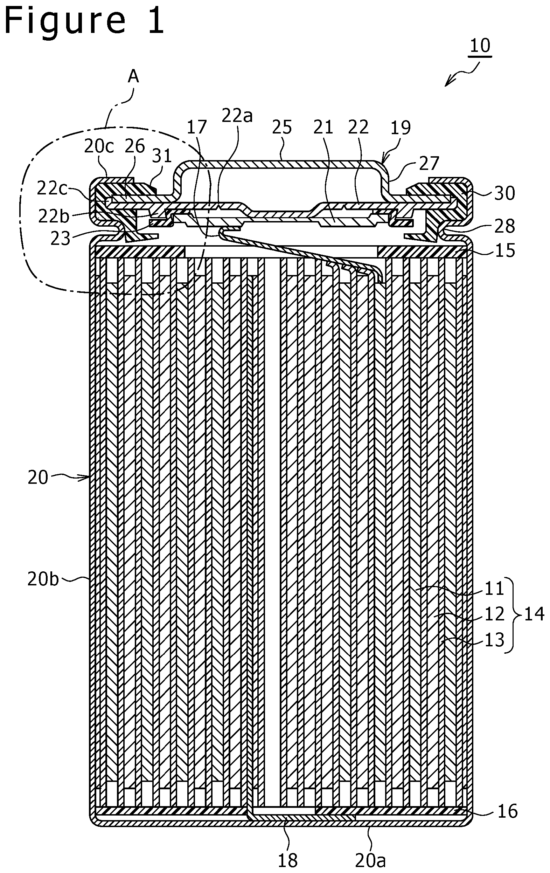

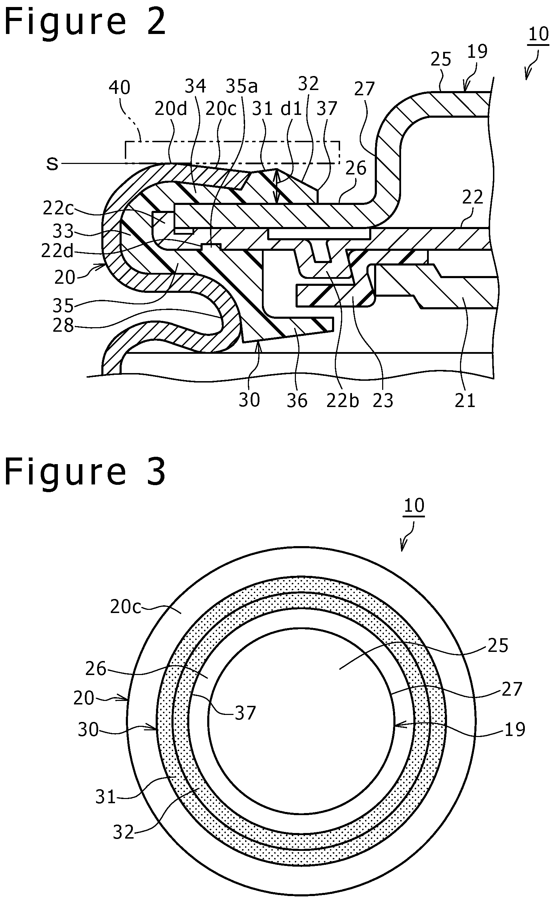

FIG. 1 is an axial cross-sectional view of the sealed battery 10 according to an embodiment of the present disclosure, in which there are no wrinkles in a protruding portion 31 of a gasket 30. FIG. 2 is an enlarged view of a portion A in FIG. 1. FIG. 3 is a top view of FIG. 1. The axial cross-sectional view of FIG. 1 shows a cross-section including a central axis of the sealed battery 10. As shown in FIG. 1, the sealed battery 10 comprises: an electrode assembly 14; a non-aqueous electrolyte; a housing can 20 that is a metal container having a cylindrical shape with a bottom and containing the electrode assembly 14 and the non-aqueous electrolyte; a sealing assembly 19 that closes an opening of the housing can 20; and the gasket 30.

The electrode assembly 14 includes a positive electrode 11, a negative electrode 12, and a separator 13 interposed between the positive electrode 11 and the negative electrode 12, and has a wound structure in which the positive electrode 11 and the negative electrode 12 are wound together via the separator 13. The housing can 20 is a cylindrical container with a bottom, and has a bottom 20a and a cylindrical portion 20b.

The non-aqueous electrolyte has ionic conductivity (for example, lithium ion conductivity). The non-aqueous electrolyte includes a non-aqueous solvent and an electrolyte salt dissolved in the non-aqueous solvent. The non-aqueous electrolyte is not limited to a liquid electrolyte (non-aqueous electrolytic solution), and may be a solid-state electrolyte using a gel polymer or the like. The sealed battery 10 is preferably a lithium-ion battery. For the electrolyte salt, for example, lithium salts such as LiBF₄ and LiPF₆ are used. For the non-aqueous solvent, esters such as ethylene carbonate (EC), propylene carbonate (PC), dimethyl carbonate (DMC), ethyl methyl carbonate (EMC), diethyl carbonate (DEC), and methyl propionate (MP), ethers, nitriles, amides, or mixed solvents of two or more of these compounds may be used. The non-aqueous solvent may contain a halogen-substituted product obtained by substituting at least some of hydrogen atoms of the solvents with halogen atoms of fluorine or the like.

Examples of the halogen-substituted product include fluorinated cyclic carbonate esters such as fluoroethylene carbonate (FEC), fluorinated chain carbonate esters, and fluorinated chain carboxylic acid esters such as methyl fluoropropionate (FMP). In order to curb a decrease in the charge/discharge cycle characteristics of the non-aqueous electrolyte secondary battery or improve input characteristics, the non-aqueous electrolyte preferably contains greater than or equal to 5 mass% of FEC, and more preferably 5 mass% to 15 mass% of FEC, relative to the mass of the non-aqueous electrolyte.

As the solid-state electrolyte, for example, a solid or gel-state polymer electrolyte, an inorganic solid-state electrolyte or the like is used. The polymer electrolyte includes, for example, a lithium salt and a matrix polymer, or a non-aqueous solvent, a lithium salt, and a matrix polymer. As the matrix polymer, for example, a polymer material that absorbs a non-aqueous solvent and becomes a gel is used. As the polymer material, for example, fluororesin, acrylic resin, polyether resin, or the like is used. As the inorganic solid-state electrolyte, for example, a material known for all-solid-state lithium-ion secondary batteries (such as, for example, oxide-based solid-state electrolyte, sulfide-based solid-state electrolyte, and halide-based solid-state electrolyte) is used.

As described above, the electrode assembly 14 has the wound structure in which the positive electrode 11 and the negative electrode 12 are wound together via the separator 13. The positive electrode 11, the negative electrode 12, and the separator 13 are long strips and spirally wound so as to be stacked alternately in a radial direction of the electrode assembly 14. The negative electrode 12 is formed with dimensions slightly larger than the positive electrode 11 to prevent lithium deposition. In other words, the negative electrode 12 is formed to be longer than the positive electrode 11 in both the longitudinal direction and the lateral direction. The separator 13 is formed with dimensions slightly larger than at least the positive electrode 11, and, for example, two pieces of separator 13 are disposed to hold the positive electrode 11 therebetween.

The positive electrode 11 includes a positive electrode core and positive electrode mixture layers provided on both surfaces of the positive electrode core. For the positive electrode core, it is possible to use a foil of a metal stable within an electric potential range of the positive electrode 11, such as aluminum and an aluminum alloy, a film having such a metal disposed as a front layer or the like. The positive electrode mixture layer contains a positive electrode active material, a conductive agent such as acetylene black, and a binding agent such as polyvinylidene fluoride (PVDF). The positive electrode 11 can be produced by forming a positive electrode mixture layer on both surfaces of the positive electrode core by applying a positive electrode mixture slurry containing a positive electrode active material, a conductive agent, a binding agent, etc. onto the positive electrode core, drying the coating, and then compressing the coating.

For the positive electrode active material, for example, a lithium transition metal composite oxide is used. Examples of the metal element contained in the lithium transition metal composite oxide include Ni, Co, Mn, Al, B, Mg, Ti, V, Cr, Fe, Cu, Zn, Ga, Sr, Zr, Nb, In, Sn, Ta, W and the like. A preferable example of the lithium transition metal composite oxide is a lithium metal composite oxide containing at least one kind of Ni, Co, and Mn. Specific examples include composite oxides containing Ni, Co, and Mn, and composite oxides containing Ni, Co, and Al.

The negative electrode 12 includes a negative electrode core and negative electrode mixture layers provided on both surfaces of the negative electrode core. For the negative electrode core, it is possible to use a foil of a metal stable within an electric potential range of the negative electrode 12, such as copper and a copper alloy, a film having such a metal disposed as a front layer or the like. The negative electrode mixture layer contains a negative electrode active material, and a binding agent such as styrene butadiene rubber (SBR). The negative electrode 12 can be produced by forming a negative electrode mixture layer on both surfaces of the negative electrode core by applying a negative electrode mixture slurry containing a negative electrode active material and a binding agent, etc. onto the negative electrode core, drying the coating, and then compressing the coating.

For the negative electrode active material, for example, natural graphite such as flake graphite, lump graphite, and amorphous graphite, or artificial graphite such as lump artificial graphite and graphitized mesophase carbon microbeads are used. For the negative electrode active material, a metal that alloys with lithium, such as Si and Sn, an alloy containing such a metal, a compound containing such a metal may be used, or these materials may be used in combination with graphite. A preferred example of the active material is a Si-containing material in which Si fine particles are dispersed in a SiO₂ phase or a silicate phase such as lithium silicate, or an amorphous carbon phase.

Insulating plates 15 and 16 are disposed respectively above and below the electrode assembly 14. In the example shown in FIG. 1, a positive electrode lead 17 that is attached to the positive electrode 11 passes through a through-hole of the insulating plate 15 and extends toward the sealing assembly 19, and a negative electrode lead 18 that is attached to the negative electrode 12 passes through a through-hole of the insulating plate 16 and extends toward the bottom 20a side of the housing can 20. The positive electrode lead 17 is connected by welding or the like to an inner surface that faces inward of the housing can 20 in the sealing assembly 19, and the sealing assembly 19 serves as a positive electrode terminal. The negative electrode lead 18 is connected by welding or the like to an inner surface of the bottom 20a of the housing can 20, and the housing can 20 serves as a negative electrode terminal.

The gasket 30 having an annular shape is interposed between the housing can 20 and the sealing assembly 19 to ensure sealing in the inside of the battery, and insulation between the housing can 20 and the sealing assembly 19.

At an upper end portion, which is an opening-side end portion of the housing can 20, a radially bent portion 20c is formed by being bent radially inward over the entire circumference, whereby the sealing assembly 19 is crimped and fixed to the upper end portion of the housing can 20 via the gasket 30. Moreover, as shown in FIG. 2, along with this crimp-fixation, an annular shoulder portion 20d is provided near a corner of the upper end portion of the housing can 20, the shoulder portion 20d being a portion at a radially intermediate position where the height from the bottom 20a is greatest.

At the upper end portion of the cylindrical portion 20b of the housing can 20, an annular grooved portion 28 is provided on the bottom 20a side of the radially bent portion 20c. The grooved portion 28 is a portion that protrudes radially inward over the entire circumference on the upper end side of the cylindrical portion 20b of the housing can 20. The grooved portion 28 is formed by recessing a portion of the cylindrical portion 20b radially inward, for example, by spinning. The grooved portion supports the later-described sealing assembly 19 via the gasket 30.

For the gasket 30, an insulating resin with elasticity can be used. Examples of such a resin include polyethylene (PE), polypropylene (PP), polybutylene terephthalate (PBT), polyphenylene sulfide (PPS), perfluoroalkoxy fluororesin (PFA), and nylon.

The sealing assembly 19 is a disc-shaped member comprising a current interrupting mechanism. The sealing assembly 19 has a structure in which an internal terminal plate 21, an insulating plate 23, a rupture plate 22, and a cap 25 are stacked in this order from the electrode assembly 14 side. The internal terminal plate 21 has, at a central portion, a thinned portion thinner than an outer annular portion to which the positive electrode lead 17 is connected.

The insulating plate 23 is a member made of insulating material, and having a substantially Z-shaped cross-section and a ring shape as a whole. A radially intermediate portion of the rupture plate 22 is arranged to face the internal terminal plate 21 via the insulating plate 23. A central portion of the rupture plate 22 is connected via a circular hole of the insulating plate 23 to the central thinned portion of the internal terminal plate 21 by welding or the like, thereby providing electrical continuity.

Further, the rupture plate 22 has an easily breakable portion 22a at a radially intermediate portion. The easily breakable portion 22a is made by an annular groove formed on an inner surface (a lower-side surface in FIG. 1) of the rupture plate 22. The groove for making the easily breakable portion 22a may be formed on an outer surface (an upper-side surface in FIG. 1) of the rupture plate 22.

The cap 25 has a hat shape with an annular flange 26 on a peripheral portion, and an inner surface of the flange 26 and an outer surface on the outer peripheral side of the rupture plate 22 are welded together to provide electrical continuity.

A plurality of arc-shaped projecting portions 22b (FIG. 2) are formed on the inner surface of the rupture plate 22 along the circumferential direction on a further outer peripheral side than the easily breakable portion 22a. An outer peripheral portion of the insulating plate 23 is fitted to the radially inner side of the plurality of projecting portions 22b of the rupture plate 22. Moreover, a fitting cylindrical portion 22c is formed over the entire circumference at the outer peripheral edge of the rupture plate 22 to protrude upward, and the flange 26 of the cap 25 is fitted to the fitting cylindrical portion 22c.

The internal terminal plate 21 is fitted to the inner surface of the insulating plate 23.

As shown in FIG. 2, such a sealing assembly 19 is crimped and fixed to the housing can 20 via the gasket 30 in a state in which the flange 26 of the cap 25 and the outer peripheral side portion of the rupture plate 22 overlap each other. At this time, as shown in FIG. 2 and FIG. 3, in the gasket 30, the annular protruding portion 31 that protrudes over the entire circumference is formed on the radially inner side from a radially inner end of the radially bent portion 20c of the housing can 20. By increasing the radial length of the protruding portion 31, it is possible to ensure a radial insulation distance between the tip of the housing can 20 and an outer circumferential surface of a cylindrical portion 27 that forms the cap 25 of the sealing assembly 19.

In the sealed battery 10, when the internal terminal plate 21 to which the positive electrode lead 17 is connected is electrically connected to the rupture plate 22, a current path from the electrode assembly 14 to the rupture plate 22 is formed. When an abnormality occurs in the battery and the internal pressure increases, the internal terminal plate 21 breaks, and the thinned portion of the internal terminal plate 21 separates from the outer annular portion and deforms to protrude outward of the battery. Consequently, the current path is interrupted. When the internal pressure of the battery further increases, the easily breakable portion 22a breaks as described above, thereby forming a discharge opening for gas in the battery. The gas discharged from this discharge opening is discharged to the outside of the battery through an opening (not shown) formed in the cap 25.

Note that the structure of the sealing assembly 19 is not limited to the structure shown in FIG. 1.

As described above, in the configuration in which the sealing assembly 19 is crimped and fixed to the end portion of the housing can 20 via the gasket 30, the end portion of the gasket 30 is bent radially inward as the opening-side end portion of the housing can 20 is crimped as described above during manufacturing of the battery. Consequently, a large compressive stress is generated in the circumferential direction at the radially inner end portion of the gasket 30. Therefore, at the radially inner end portion of the gasket 30, wavy wrinkles may occur in the protruding portion 31 from the housing can 2. In the protruding portion 31 of the gasket 30, a section that is deformed and warped axially outward of the battery and a section that is deformed axially inward and pressed against the axially outer surface of the sealing assembly 19 are produced alternately in the circumferential direction due to the wrinkles. Further, the greater the radial length of the protruding portion 31, the larger the axial deformation of the protruding portion 31.

When the protruding portion 31 of the gasket 30 is largely deformed axially outward at a plurality of positions in the circumferential direction due to the occurrence of such wrinkles, the deformed portion of the protruding portion may hinder the contact of the current collector plate, an inspection jig, or the like with the shoulder portion 20d. Therefore, there are possibilities of occurrence of defects, such as poor welding of the current collector plate, and dimensional defects of the battery. Moreover, when the gasket 30 has the protruding portion, it is difficult to completely prevent the occurrence of wrinkles. In the present embodiment, in order to suppress such defects, a cutout 32 is formed along the circumferential direction on the axially outer surface of the protruding portion 31 as will be described later.

The configuration of the gasket 30 will be described in detail below using FIG. 1 to FIG. 3. As shown in FIG. 1 to FIG. 3, the gasket 30 is made of resin with a substantially U-shaped cross-section and a substantially annular planar shape. Specifically, the gasket 30 includes a cylindrical portion 33 arranged at an outer peripheral end, an outer annular plate portion 34 connected to an axially outer end of the cylindrical portion 33 and extending radially inward, and an inner annular plate portion 35 connected to an axially inner end of the cylindrical portion 33 and extending radially inward. The outer annular plate portion 34 is formed with the protruding portion 31 that protrudes radially inward beyond the radially inner end of the radially bent portion 20c of the housing can 20. The radial length of the protruding portion 31 can be greater than or equal to 0.5 mm.

The radially inner end portion of the inner annular plate portion 35 is bent toward the bottom 20a side (the lower side in FIG. 2), and then an inner bent portion 36 that extends radially inward is formed to face a surface on the bottom 20a side of the insulating plate 23. An annular projecting portion 35a is formed on the axially outer surface of the inner annular plate portion 35, and the projecting portion 35a fits into an annular groove 22d formed on the inner surface of the rupture plate 22, thereby increasing the coupling strength of the gasket 30 to the sealing assembly 19.

In the present embodiment, the cutout 32 continuing in the circumferential direction is formed over the entire circumference of the axially outer surface of the protruding portion 31 of the gasket 30. The cutout 32 is formed with a radial width including a tip 37 of the protruding portion 31.

As shown in FIG. 2 and FIG. 3, when wrinkles do not occur in the protruding portion 31, the cutout 32 has a chamfered conical surface shape obtained by removing the corner of the tip side wall of the axially outer surface of the gasket 30. Thus, the cutout 32 has a shape formed by cutting the axially outer surface of the protruding portion 31 so as to gradually decrease the thickness of the protruding portion 31 on the tip 37 side.

The axial thickness of the protruding portion 31 in the section where the cutout 32 is formed is smaller than a thickness d1 (FIG. 2) of the gasket 30 in a section adjacent to the radially outer side of the cutout 32. In FIG. 3, the protruding portion 31 is indicated as a sand-patterned portion. In FIG. 2, the thickness of the protruding portion 31 gradually increases toward a radially inner side between a protruding root position from the housing can 20 and the cutout 32, but the thickness may be constant between the protruding root position and the cutout 32.

FIG. 1 to FIG. 3 show the shape in which there are no wrinkles in the protruding portion 31 of the gasket 30. In this case, as shown in FIG. 2, the protruding portion 31 does not protrude axially outward (the upper side in FIG. 2) beyond the shoulder portion 20d of the housing can 20. In FIG. 2, an imaginary plane that passes through the shoulder portion 20d and is orthogonal to the center axis of the battery is indicated with a solid line S. The protruding portion 31 shown in FIG. 2 does not protrude axially outward beyond the imaginary plane S.

Such a cutout 32 may be formed by a cutout preformed in the gasket 30 before being inserted into the opening-side end portion of the housing can 20. For example, the gasket 30 before being inserted into the housing can has the cylindrical portion and the inner annular plate portion 35, and, if the gasket 30 has an annular shape with a substantially L-shaped cross-section before the outer annular plate portion 34 is formed, a conical-shaped cutout is formed in advance on the outer peripheral surface of the axially outer end portion of a portion that will become the protruding portion 31 of the cylindrical portion. Then, the gasket 30 is inserted into the opening-side end portion of the housing can 20 in a state in which the portion that will become the protruding portion 31 protrudes axially outward from the cylindrically extending opening-side end portion of the housing can 20. Thereafter, the opening-side end portion of the housing can 20 is crimped radially inward to form the radially bent portion 20c in the housing can 20. Consequently, the protruding portion 31 is also deformed radially inward, and the cutout 32 having the shape shown in FIG. 2 and FIG. 3 is formed at the portion including the tip 37 of the axially outer surface of the protruding portion 31.

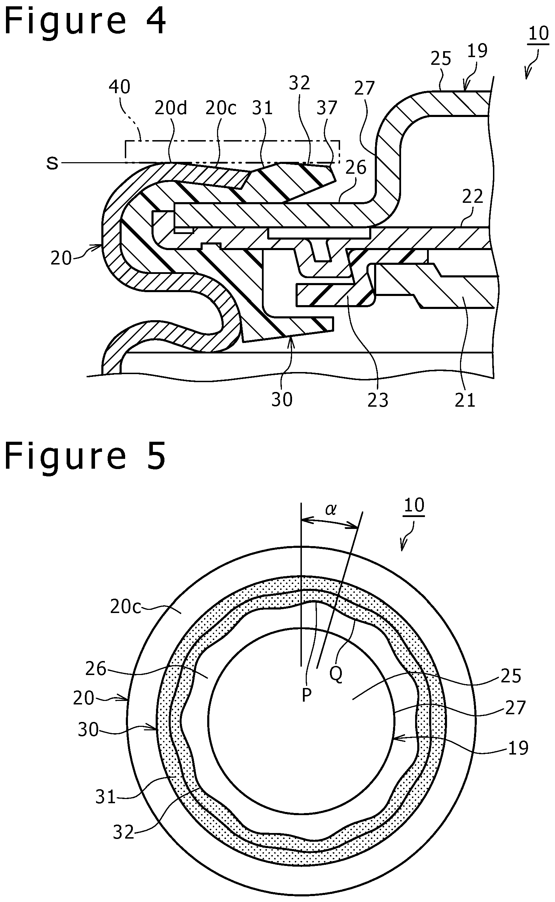

On the other hand, when the gasket 30 has the protruding portion 31 as shown in FIG. 1 to FIG. 3, it is difficult to completely prevent wrinkles from occurring in the protruding portion 31 during actual manufacturing of the sealed battery 10. FIG. 4 and FIG. 5 show a case in which wrinkles occur in the protruding portion 31 of the gasket 30 in the present embodiment, FIG. 4A is a view corresponding to FIG. 2, and FIG. 5 is a top view of FIG. 4.

In this case, as shown in FIG. 5, due to wrinkles (not shown) occurring at a plurality of radial positions in the protruding portion 31 of the gasket 30, a section that is warped axially outward and has a decreased radial length, and a section that is pressed against the flange 26 of the sealing assembly 19 and has an increased radial length are produced alternately in the circumferential direction of the protruding portion 31. Consequently, when seen from above, the inner circumferential edge of the protruding portion 31 is in an annularly continuous wavy state as shown in FIG. 5. For example, at a position, like a position P in FIG. 5, where the inner circumferential edge of the protruding portion 31 is deformed and recessed radially outward, the protruding portion 31 is deformed and warped axially outward. On the other hand, at a position, like a position Q in FIG. 5, where the inner circumferential edge of the protruding portion 31 protrudes radially inward, the protruding portion 31 is in a state in which a section including the tip side is pressed against the axially outer surface of the flange 26.

When wrinkles occur in the protruding portion 31, the surface of the protruding portion 31 has a wavy shape along the circumferential direction. Similarly to the case shown in FIG. 2 and FIG. 3, the cutout 32 has a shape formed by cutting the axially outer surface of the protruding portion 31 such that the thickness of the protruding portion 31 gradually decreases toward the tip. Moreover, the axial thickness of the protruding portion 31 in the section where the cutout 32 is formed is smaller than the thickness of the gasket 30 in a section adjacent to the radially outer side of the cutout 32.

According to the present embodiment, the cutout 32 that decreases the thickness is formed in a section of the axially outer surface of the protruding portion 31, including the tip 37. Consequently, even when wrinkles occur in the protruding portion 31, the section of the protruding portion 31 on the tip 37 side, which is easily deformed axially outward, can be prevented from being deformed axially outward beyond the shoulder portion 20d of the housing can 20. For example, as shown in FIG. 4, even at a position where the protruding portion 31 is maximally deformed axially outward, the protruding portion 31 does not protrude axially outward beyond the imaginary plane S. Consequently, since the contact between the current collector plate 40 and the shoulder portion 20d is not hindered by the protruding portion 31, welding defects of the current collector plate 40 and the shoulder portion 20d can be prevented.

Similarly, when an inspection jig for inspecting the height from the bottom 20a to the shoulder portion 20d of the battery is pressed against the shoulder portion 20d in an inspection step during the manufacturing of the battery, even if wrinkles occur in the protruding portion 31, it is possible to prevent the inspection jig from coming into contact with the protruding portion 31 instead of the shoulder portion 20d. Therefore, it is possible to prevent occurrence of dimensional defects of the battery. Thus, according to the present embodiment, it is possible to suppress defects caused by wrinkles occurring in the gasket 30.

Note that, in this example, although the cutout 32 is formed over the entire circumference of the protruding portion 31, the cutout 32 may be formed continuously in at least a section in the circumferential direction of the axially outer surface of the protruding portion 31. For example, since the protruding portion 31 is largely deformed axially outward in a range in the circumferential direction of the protruding portion 31 indicated with an arrow α in FIG. 5, an arc-shaped cutout that is continuous in the circumferential direction beyond this range and has a radial width may be formed on the axially outer surface of the protruding portion 31. Then, the current collector plate 40 (FIG. 4) may be welded to the shoulder portion 20d of the housing can 20 in a range coinciding with the cutout in the circumferential direction, so that the current collector plate 40 may face the cutout. **In** this case, it is possible to prevent welding defects of the current collector plate 40 and the shoulder portion 20d, which are defects caused by wrinkles occurring in the gasket 30.

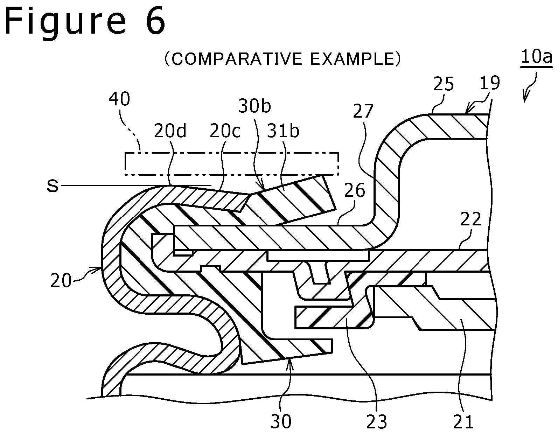

On the other hand, FIG. 6 is a view corresponding to FIG. 4 and showing that, in a sealed battery 10a of a comparative example in which there is no cutout in the protruding portion 31 of a gasket 30b, defects occur when wrinkles occur in the protruding portion 31b. Thus, when wrinkles occur in the protruding portion 31b, since there is no cutout on the axially outer surface including the tip of the protruding portion 31b, a plurality of positions in the circumferential direction on the tip side of the protruding portion 31b are largely deformed axially outward as shown in FIG. 6. Consequently, the protruding portion 31b largely protrudes axially outward beyond the imaginary plane S. Therefore, there is a possibility of occurrence of defects, such as welding defects of the current collector plate 40 and the shoulder portion 20d of the housing can 20.

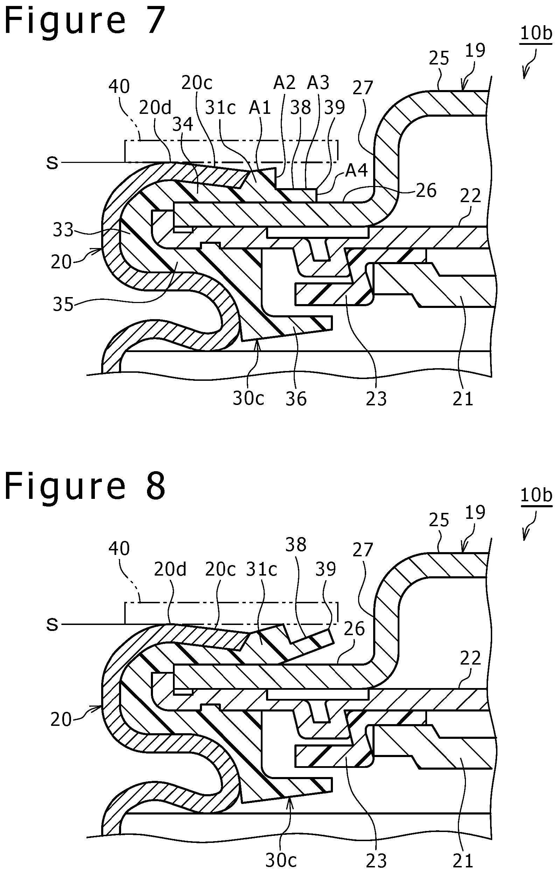

FIG. 7 is a view corresponding to FIG. 2 and showing a sealed battery 10b of another example of the embodiment in which there is no wrinkle in a protruding portion 31c of a gasket 30c. In the sealed battery 10b of this example, a cutout 38 that is formed over the entire circumference of the axially outer surface of the protruding portion 31c of the gasket 30c makes a stepwise change in the thickness of the protruding portion 31c. Specifically, as shown in FIG. 7, when there is no wrinkle in the protruding portion 31c, the cutout 38 has a shape in which a corner of the tip side wall of the axially outer surface of the gasket 30c is removed by the step. Consequently, the cutout 38 has a shape with a decreased thickness on the tip side of the protruding portion 31c. Thus, the axial thickness of the protruding portion 31c in a section where the cutout 38 is formed is smaller than the thickness of the gasket 30c in a section adjacent to the radially outer side of the cutout 38.

The cutout 38 can be formed by a cutout preformed in the gasket 30c before being inserted into the opening-side end portion of the housing can 20. For example, the gasket 30c before being inserted into the housing can 20 has the cylindrical portion and the inner annular plate portion 35, and, when the gasket 30c has an annular shape with a substantially L-shaped cross-section before the outer annular plate portion 34 is formed, a cutout having a stepped surface and a small-diameter cylindrical portion adjacent to the axially outer side of the stepped surface is formed in advance on the outer circumferential surface of the axially outer end portion of a section which will become the protruding portion 31c of the cylindrical portion. An outer diameter of the small-diameter cylindrical portion is smaller than an outer diameter of a section of the cylindrical portion of the gasket 30 adjacent to the axially inner side of the stepped portion.

Then, the gasket 30c is inserted into the opening-side end portion of the housing can 20 in a state in which the section that will become the protruding portion 31c protrudes axially outward from the cylindrically extending opening-side end portion of the housing can 20. Thereafter, the opening-side end portion of the housing can 20 is crimped radially inward to form the radially bent portion 20c in the housing can 20. Consequently, the protruding portion 31c is also deformed radially inward, and the cutout 38 having the shape shown in FIG. 7 is formed in the section including the tip of the axially outer surface of the protruding portion 31c.

FIG. 8 is a view corresponding to FIG. 4 and showing a case when wrinkles occur in the protruding portion 31c of the gasket 30c in the configuration of this example. In this case, similar to the case shown in FIG. 5, due to the wrinkles occurring at a plurality of positions in the radial direction of the protruding portion 31c, a section that is warped axially outward and has a decreased radial length, and a section that is pressed against the flange 26 of the sealing assembly 19 and has an increased radial length are produced alternately in the circumferential direction of the protruding portion 31. As a result of the deformation of the protruding portion 31c, a section where the protruding portion 31c is deformed axially outward as shown in FIG. 8 and a section where the protruding portion 31c is pressed against the flange 26 similarly to the shape in FIG. 7 are produced alternately in the circumferential direction of the protruding portion 31c.

When wrinkles occur in the protruding portion 31c, the surface of the protruding portion 31c has a wavy shape along the circumferential direction. Similarly to the case shown in FIG. 7, the cutout 38 has a shape formed by cutting the axially outer surface of the protruding portion 31c such that the thickness of the protruding portion 31c is smaller on the tip side. Moreover, the axial thickness of the protruding portion 31c in the section where the cutout 38 is formed is smaller than the thickness of the gasket 30 in a section adjacent to the radially outer side of the cutout 38.

According to the configuration of this example, the cutout 38 having a smaller thickness is formed in a section including a tip 39 of the axially outer surface of the protruding portion 31c. Consequently, even when wrinkles occur in the protruding portion 31c, a section of the protruding portion 31c on the tip 39 side, which is easily deformed axially outward, can be prevented from being deformed axially outward beyond the shoulder portion 20d of the housing can 20. Therefore, similarly to the configurations shown in FIG. 1 to FIG. 5, it is possible to suppress defects caused by wrinkles occurring in the gasket 30c.

Further, according to the configuration of this example, the cutout 38 makes a stepwise change in the thickness of the protruding portion 31c. Consequently, a creepage distance from the radially inner end of the radially bent portion 20c of the housing can 20 to the surface of the flange 26 of the sealing assembly 19 via points A1, A2, A3, and A4 on the surface of the protruding portion 31c of the gasket 30c shown in FIG. 7 can be made longer than that when the cutout 32 is formed in a conical shape as in the configurations shown in FIG. 1 to FIG. 5. Therefore, it is possible to ensure further insulation between the housing can 20 and the sealing assembly 19. In this example, other configurations and functions are the same as those of the configurations shown in FIG. 1 to FIG. 5.

Note that, in this example, the cutout may be formed continuously in only a section in the circumferential direction of the axially outer surface of the protruding portion 31c. In this case, it is possible to prevent welding defects of the current collector plate welded to the shoulder portion 20d, which are defects caused by wrinkles occurring in the gasket 30c.

The present disclosure is described further by the following embodiments.

Configuration 1: A sealed battery comprising:
an electrode assembly including a positive electrode and a negative electrode wound together via a separator;
a housing can having a cylindrical shape with a bottom and containing the electrode assembly;
a sealing assembly that closes an opening of the housing can; and
an annular gasket interposed between the housing can and the sealing assembly, wherein
a radially bent portion that is bent radially inward is formed at an opening-side end portion of the housing can, whereby the sealing assembly is crimped and fixed to the opening-side end portion via the gasket,
the gasket has a protruding portion that is formed to protrude radially inward beyond a radially inner end of the radially bent portion,
a cutout is formed in at least a section in a circumferential direction of an axially outer surface of the protruding portion such that the cutout is continuous and has a radial width including a tip of the protruding portion, and
an axial thickness of the protruding portion in the section where the cutout is formed is smaller than a thickness of the gasket in a section adjacent to a radially outer side of the cutout.

Configuration 2: The sealed battery according to configuration 1, wherein a range in the circumferential direction in which the cutout is formed is an entire circumference of the protruding portion.

Configuration 3: The sealed battery according to configuration 1 or 2, wherein the cutout has a shape formed by cutting the axially outer surface of the protruding portion such that the thickness of the protruding portion is smaller on a tip side.

Configuration 4: The sealed battery according to configuration 3, wherein the cutout makes a stepwise change in the thickness of the protruding portion.

### REFERENCE SIGNS LIST

10, 10a, 10b Sealed battery; 11 Positive electrode; 12 Negative electrode; 13 Separator; 14 Electrode assembly; 15, 16 Insulating plate; 17 Positive electrode lead; 18 Negative electrode lead; 19 Sealing assembly; 20 Housing can; 20a Bottom; 20b Cylindrical portion, 20c Radially bent portion; 20d Shoulder portion; 21 Inner terminal plate; 22 Rupture plate; 22a Easily breakable portion; 22b Projecting portion; 22c Fitting cylindrical portion; 22d Annular groove; 23 Insulating plate; 25 Cap; 26 Flange; 27 Cylindrical portion: 28 Grooved portion; 30, 30b, 30c Gasket; 31, 31b, 31c Protruding portion; 32 Cutout; 33 Cylindrical portion; 34 Outer annular plate portion; 35 Inner annular plate portion; 35a Projecting portion; 36 Inner bent portion; 37 Tip; 38 Cutout; 39 Tip; 40 Current collector plate; and 41 Insulating ring.

## Claims

1. A sealed battery comprising:
an electrode assembly including a positive electrode and a negative electrode wound together via a separator;
a housing can having a cylindrical shape with a bottom and containing the electrode assembly;
a sealing assembly that closes an opening of the housing can; and
an annular gasket interposed between the housing can and the sealing assembly, wherein
a radially bent portion that is bent radially inward is formed at an opening-side end portion of the housing can, whereby the sealing assembly is crimped and fixed to the opening-side end portion via the gasket,
the gasket has a protruding portion that is formed to protrude radially inward beyond a radially inner end of the radially bent portion,
a cutout is formed in at least a section in a circumferential direction of an axially outer surface of the protruding portion such that the cutout is continuous and has a radial width including a tip of the protruding portion, and
an axial thickness of the protruding portion in the section where the cutout is formed is smaller than a thickness of the gasket in a section adjacent to a radially outer side of the cutout.

2. The sealed battery according to claim 1, wherein a range in the circumferential direction in which the cutout is formed is an entire circumference of the protruding portion.

3. The sealed battery according to claim 1, wherein the cutout has a shape formed by cutting the axially outer surface of the protruding portion such that the thickness of the protruding portion is smaller on a tip side.

4. The sealed battery according to claim 3, wherein the cutout makes a stepwise change in the thickness of the protruding portion.
